# FASCICULE DE BREVET EUROPEEN

(11) **EP 3 230 153 B1**
(45) Date de publication et mention de la délivrance du brevet: **02.01.2019**
(21) Numéro de dépôt: 15800884.7
(22) Date de dépôt: 09.11.2015
(51) Int. Cl.: B62D 25/16

(54) **ENSEMBLE DE CARROSSERIE LATÉRAL AVANT D'UN VÉHICULE AUTOMOBILE, COMPORTANT UN RENFORT D'AILE MUNI D'UN OBTURATEUR D'UNE FENÊTRE D'UN GARDE-BOUE**
VORDERSEITIGER KAROSSERIEAUFBAU EINES KRAFTFAHRZEUGES MIT EINER FLÜGELVERSTÄRKUNG MIT EINER ABDICHTUNG EINES FENSTERS EINES KOTFLÜGELS
FRONT SIDE BODYWORK ASSEMBLY OF A MOTOR VEHICLE, INCLUDING A WING REINFORCEMENT PROVIDED WITH A SEAL OF A WINDOW OF A MUDGUARD

(30) Priorité: 08.12.2014 FR 1462048
(43) Date de publication de la demande: 18.10.2017
(73) Titulaire: PSA Automobiles SA, 78300 Poissy (FR)
(72) Inventeur: BERTH, Stephane, F-92320 Chatillon (FR)
(74) Mandataire: Fernandez, Francis Lionel
(86) Numéro de dépôt international: PCT/FR2015/053033
(87) Numéro de publication internationale: WO 2016/092164

(56) Documents cités:
- FR-A1- 2 931 786
- FR-A1- 2 969 570

## Description

La présente invention est du domaine des ensembles de carrosserie latéraux avant d'un véhicule automobile, composés d'éléments de carrosserie comprenant un garde boue et une aile rigidifiée par un renfort à l'encontre d'une prise d'appui sur l'aile depuis l'extérieur au véhicule.

La présente invention relève d'un tel ensemble de carrosserie latéral avant d'un véhicule automobile, relève d'un véhicule automobile équipé d'un tel ensemble de carrosserie latéral avant et relève des modalités d'assemblage à bord dudit véhicule automobile entre des éléments de carrosserie composant ledit ensemble de carrosserie latéral avant.

Dans le domaine des ensembles de carrosserie d'un véhicule automobile, un ensemble de carrosserie latéral avant est couramment composé de plusieurs éléments de carrosserie, dont au moins une aile et un garde-boue. L'aile et le garde-boue sont classiquement fixés chacun sur une structure porteuse solidaire du châssis du véhicule, tel que par vissage, par boulonnage, par rivetage, par agrafage et/ou par emboîtement par exemple.

L'aile est couramment rigidifiée, au moins pour éviter sa déformation sous l'effet d'une éventuelle prise d'appui contre l'aile depuis l'extérieur du véhicule. La rigidification de l'aile à l'encontre de ladite prise d'appui est typiquement procurée par un élément de carrosserie, dit renfort, inclus dans ledit ensemble de carrosserie latéral avant et couramment fixé sur ladite structure porteuse, tel que par vissage, par boulonnage, par rivetage, par agrafage et/ou par emboîtement par exemple. Il est à noter que ledit renfort procure une rigidification de l'aile vis-à-vis d'efforts considérés modérés, tel qu'au plus en cas de choc à basses vitesses de progression du véhicule.

De tels efforts modérés sont communément appréciés comme autorisant une réparation de l'aile économiquement viable. L'invention s'inscrit dans le cadre des contraintes liées à une telle rigidification de l'aile, en tenant compte notamment de la structure fonctionnelle dudit renfort et des modalités d'assemblage entre eux desdits éléments de carrosserie.

Bien évidemment, un tel cadre spécifique de contraintes n'exclue cependant pas la participation de fait du renfort pour rigidifier l'aile vis-à-vis d'efforts conséquents auxquels l'aile est potentiellement soumis en cas de chocs violents subis par le véhicule.

Pour connaître un environnement technologique proche de la présente invention, on pourra se reporter par exemple au document FR2969570 (PEUGEOT CITROEN AUTOMOBILES), qui décrit un ensemble de carrosserie comprenant une aile rigidifiée par un renfort. Un système articulé permet de régler par translation la position du renfort par rapport à l'aile et à la structure porteuse.

On pourra aussi se reporter au document FR2931786 (PEUGEOT CITROEN AUTOMOBILES), qui décrit un ensemble de carrosserie comprenant un garde-boue et une aile rigidifiée par une entretoise fixée en interposition entre l'aile et le garde-boue contre lesquels l'entretoise prend des appuis antagonistes. On pourra encore se reporter aux documents JP2000006847 (NISSAN MOTOR), JP2007283941 (TOYOTA MOTOR CORP.) et US2006001293 (HONDA MOTOR CO LTD), qui décrivent diverses modalités de rigidification d'une aile au moyen d'un renfort prenant appui contre une structure porteuse sur laquelle l'aile et le renfort sont fixés.

Dans ce contexte, un ensemble de carrosserie latéral avant d'un véhicule automobile est typiquement composé d'éléments de carrosserie comprenant au moins, successivement depuis l'extérieur vers l'intérieur du véhicule, l'aile, le renfort et le garde-boue, chacun munis de moyens de fixation individuelle à une structure porteuse du véhicule.

Selon une organisation spécifique d'un tel ensemble de carrosserie, l'aile est fixée sur la structure porteuse et sur le renfort, lui-même fixé à la structure porteuse. Le garde-boue est fixé sur la structure porteuse, voire aussi subsidiairement sur l'aile. La structure porteuse est munie de pattes de fixation recevant des organes de fixation de l'aile et du renfort, ainsi que du garde-boue.

Par ailleurs, le garde-boue comporte une fenêtre dans la zone de fixation de l'aile sur le renfort. Une telle fenêtre procure un accès aisé depuis l'intérieur du véhicule à ladite zone de fixation de l'aile sur le renfort nonobstant la présence du garde-boue, et permet d'éviter une éventuelle interférence du garde-boue avec le renfort pouvant induire des décalages de positionnement des éléments de carrosserie lors de leur montage à bord du véhicule.

Il est apparu à l'usage qu'une telle organisation de l'ensemble de carrosserie méritait d'être améliorée et la présente invention s'inscrit dans le cadre d'une telle recherche d'amélioration de l'ensemble de carrosserie.

Il est plus particulièrement visé par la présente invention de proposer des modalités avantageuses d'assemblage entre eux des éléments de carrosserie composant au moins en partie l'ensemble de carrosserie, tout en obviant à d'éventuels nuisances et/ou inconvénients liés à la présence de la fenêtre ménagée à travers le garde-boue pouvant entre autre faire obstacle à la recherche d'amélioration de l'ensemble de carrosserie.

Dans le cadre d'une telle recherche, il doit notamment être pris en compte les contraintes économiques dominantes dans le domaine des véhicules automobiles. Plus particulièrement, il ne doit pas être perdu de vue que les améliorations recherchées doivent procurer à moindres coûts un assemblage fiable des éléments de carrosserie entre eux et sur la structure porteuse, confortant la cohésion de l'ensemble de carrosserie.

Toujours vis-à-vis des contraintes économiques, il ne doit pas encore être perdu de vue qu'il est utile de faciliter les opérations de contrôle, d'entretien et/ou de maintenance du véhicule, voire de réduire leur fréquence, ainsi que de faciliter les éventuelles opérations de réparation de l'un au moins des éléments de carrosserie.

Notamment, les modalités d'assemblage entre eux des éléments de carrosserie doivent permettre d'effectuer le plus rapidement et aisément possible les opérations de montage et de démontage à bord du véhicule des différents éléments de carrosserie que comprend l'ensemble de carrosserie.

Dans ce contexte, la présente invention a principalement pour objet un ensemble de carrosserie latéral avant d'un véhicule automobile ainsi qu'un véhicule automobile équipé d'un tel ensemble de carrosserie latéral avant.

La présente invention a aussi subsidiairement pour objet des modalités d'assemblage entre eux et de montage sur une structure porteuse du véhicule, des éléments de carrosserie composant au moins en partie l'ensemble de carrosserie faisant l'objet principal de la présente invention.

Pour préciser si besoin les notions relatives abordées, il est communément admis dans le domaine des véhicules automobiles :
-) que les notions « avant » et « arrière » du véhicule sont définies suivant la direction d'avancement vers l'avant du véhicule identifiée selon la station du conducteur à bord du véhicule, le conducteur en station de conduite du véhicule faisant face à la direction d'avancement vers l'avant du véhicule.
-) que la notion de « latéral » est identifiée par les côtés du véhicule répartis de part et d'autre d'un axe longitudinal transversalement médian du véhicule s'étendant entre l'avant et l'arrière du véhicule.

Un ensemble de carrosserie latéral avant pour véhicule automobile conforme à la présente invention est composé d'éléments de carrosserie comprenant au moins une aile, un organe de rigidification de l'aile, dit renfort, et un garde-boue. L'aile, le renfort et le garde-boue sont chacun destinés à être individuellement fixés sur une structure porteuse dudit véhicule automobile.

L'aile est fixée sur le renfort et le garde-boue comporte au moins une fenêtre ménageant à son travers une ouverture d'accès à une zone de fixation entre l'aile et le renfort.

Ladite ouverture permet notamment de ménager un passage à travers le garde-boue pour au moins un organe de fixation de l'aile sur le renfort depuis l'intérieur du véhicule.

Dans un tel contexte, l'ensemble de carrosserie de la présente invention est principalement reconnaissable en ce que le renfort comporte un obturateur constituant un organe d'obturation de ladite ouverture à sa face orientée vers le renfort. Par suite, la fenêtre est rendue borgne à sa face orientée vers le renfort par obturation de l'ouverture par l'obturateur.

En outre, l'obturateur constitue un organe de calage du garde-boue contre l'aile par prise d'appui du garde-boue contre le renfort, et plus spécifiquement contre l'obturateur dont le renfort est muni.

Ces dispositions sont telles que :
-) le renfort muni de l'obturateur forme un obstacle au passage à travers la fenêtre d'éléments extérieurs au véhicule susceptibles de pénétrer inopportunément, à l'intérieur du compartiment moteur notamment. Il est bien évidemment compris que de tels éléments extérieurs sont des corps étrangers provenant essentiellement de l'extérieur du véhicule, tels que de l'eau, de la boue, des salissures et/ou des corpuscules solides par exemple.
-) le garde-boue peut prendre appui contre l'aile par l'intermédiaire du renfort et plus particulièrement par l'intermédiaire de l'obturateur, ce qui permet à un opérateur de caler le garde-boue lors de son montage à bord du véhicule en direction de l'aile, et par suite de faciliter le montage du garde-boue à bord du véhicule, notamment postérieurement à l'installation de l'aile et du renfort à bord du véhicule.
-) la fixation du garde-boue à bord du véhicule peut être confortée par une fixation robuste du garde-boue sur le renfort et plus spécifiquement sur l'obturateur, ce qui permet en outre de limiter le nombre de points de fixation du garde-boue sur la structure porteuse et par suite de limiter les actes à accomplir par un opérateur pour monter le garde-boue à bord du véhicule.

Plus particulièrement selon une forme avantageuse de réalisation, le garde-boue est fixé sur le renfort au moyen d'organes de fixation qualifiés garde-boue/renfort, tels que des vis ou des agrafes par exemple, placés en prise conjointement sur l'obturateur et sur le garde-boue en bordure de la fenêtre.

La fixation sur le renfort du garde-boue calé en appui contre l'obturateur par un opérateur, peut être aisément accomplie par l'opérateur depuis l'intérieur du véhicule après fixation de l'aile et du renfort sur la structure porteuse du véhicule et après fixation de l'aile sur le renfort.

Selon une forme avantageuse de réalisation selon laquelle l'aile est fixée au renfort par l'intermédiaire d'un sabot intégré au renfort, l'obturateur est agencé en manchon entourant au moins en partie ledit sabot du renfort.

Le manchon comporte avantageusement un débordement par rapport au renfort dans sa partie considérée dans l'environnement proche du sabot. Ledit débordement, au moins orienté vers le garde-boue, constitue un organe d'appui du garde-boue contre le renfort.

Un tel débordement ménage un jeu entre le renfort et le garde-boue, ce qui permet d'éviter toute interférence entre le renfort et le garde-boue dans la zone de fixation entre le renfort et l'aile.

Selon une forme de réalisation, l'aile est fixée au renfort par l'intermédiaire d'au moins une languette intégrée à un retour de forme de l'aile coiffant une bordure du garde-boue interposée entre le renfort et la languette. Au moins un organe de fixation, qualifié aile/renfort, s'étend à travers la fenêtre du garde-boue en étant placé en prise conjointement avec la languette et le sabot.

Selon une forme préférée de réalisation, le sabot comporte un jeu de trous recevant ledit au moins un organe de fixation aile/renfort, tel que constitué d'une vis, d'un boulon ou d'une agrafe par exemple. A partir d'une exploitation sélective de l'un des trous dudit jeu de trous, un positionnement relatif entre le sabot et l'organe de fixation aile/renfort est autorisé en fonction des positions relatives entre l'aile, le renfort et le garde-boue.

L'obturateur est potentiellement rapporté sur le renfort par l'intermédiaire d'organes de fixation et/ou par scellement tel que par collage par exemple.

Il est cependant préféré une forme de réalisation selon laquelle l'obturateur est intégré de fabrication au renfort, notamment lors de sa mise en forme, tel que classiquement par moulage, voire encore par surmoulage.

Il est en effet à noter que l'obturateur peut être issu d'un matériau distinct du renfort, le matériau dont est issu l'obturateur pouvant avantageusement être un matériau souple, tel qu'un élastomère, procurant une prise d'appui élastique du garde-boue contre le renfort lors du calage du garde-boue par l'intermédiaire de l'obturateur.

Un tel obturateur en élastomère peut être avantageusement rapporté par scellement sur le renfort, et plus avantageusement encore par surmoulage. Dans un tel contexte, l'obturateur constitue potentiellement un organe amortisseur de la prise d'appui du garde-boue contre l'aile, au moins vis-à-vis des efforts auxquelles l'aile est potentiellement soumise voire encore vis-à-vis des vibrations.

En outre de par sa souplesse, un tel obturateur en élastomère peut être avantageusement exploité pour positionner le garde-boue relativement au renfort sans risque d'interférence des positionnements propres du garde-boue, du renfort et/ou de l'aile par rapport à la structure porteuse, en raison de la souplesse et donc de la déformabilité conférée à l'obturateur issu d'un élastomère.

A titre d'exemple, l'obturateur issu d'un élastomère peut comporter une collerette coopérant par emboîtement élastique avec la fenêtre, à sa périphérie notamment.

La présente invention a aussi pour objet un véhicule automobile reconnaissable en ce qu'il est équipé d'un ensemble de carrosserie tel qu'il vient d'être décrit. Tel que précédemment visé, le véhicule automobile comporte une structure porteuse sur laquelle sont individuellement fixés les éléments de carrosserie de l'ensemble de carrosserie.

Dans un tel contexte, le renfort est plus particulièrement fixé en interposition entre l'aile et la structure porteuse contre lesquels le renfort prend directement des appuis antagonistes pour rigidifier l'aile à l'encontre de sa déformation. On relèvera que dans ce contexte, la rigidification de l'aile procurée par le renfort ne résulte pas de la prise d'appuis antagonistes du renfort contre l'aile et le garde-boue, l'appui pris par le garde-boue contre le renfort par l'intermédiaire de l'obturateur excluant une participation du garde-boue à constituer un organe opposant un effort significatif à l'encontre d'une déformation de l'aile.

Selon la présente invention, un procédé d'assemblage à bord d'un véhicule automobile d'un ensemble de carrosserie tel qu'il vient d'être décrit procure un montage aisé des éléments de carrosserie le composant, comprenant pour rappel l'aile, le renfort et le garde-boue.

Plus particulièrement, un tel procédé comprend notamment les opérations suivantes :
-) fixer le renfort et l'aile sur la structure porteuse,
-) approcher le garde boue en position de montage sur la structure porteuse et caler le garde-boue en appui contre l'obturateur en direction de l'aile, puis fixer le garde boue au moins sur la structure porteuse,
-) fixer l'aile sur le renfort depuis l'intérieur du véhicule à travers l'ouverture ménagée par la fenêtre du garde-boue et fermée à sa face orientée vers le renfort par l'obturateur.

De préférence, le procédé comprend en outre une opération de fixation du garde-boue sur le renfort effectuée postérieurement à l'opération de fixation de l'aile sur le renfort.

De préférence encore, l'opération de fixation de l'aile sur le renfort comprend une étape de positionnement relatif entre l'organe de fixation aile/renfort et le sabot, à partir d'une exploitation sélective, bien évidemment effectuée par l'opérateur, de l'un des trous dudit jeu de trous avantageusement ménagés à travers le sabot.

Un exemple de réalisation de la présente invention va être décrit en relation avec les figures des planches annexées, dans lesquelles :
Les fig.1, fig.2 et fig.3 sont des illustrations de côté d'un ensemble de carrosserie latéral avant de la présente invention monté sur une structure porteuse d'un véhicule automobile, respectivement représentés depuis l'extérieur du véhicule pour les fig.1 et fig.2, et depuis l'intérieur du véhicule pour la fig.3.

Les fig.4 et fig.5 sont des illustrations en perspective d'un détail A de l'ensemble de carrosserie latéral avant représenté sur les fig.1 à fig.3.

La fig.6 est une illustration en perspective d'un renfort d'aile que comprend l'ensemble de carrosserie latéral avant représenté sur les fig.1 à fig.5.

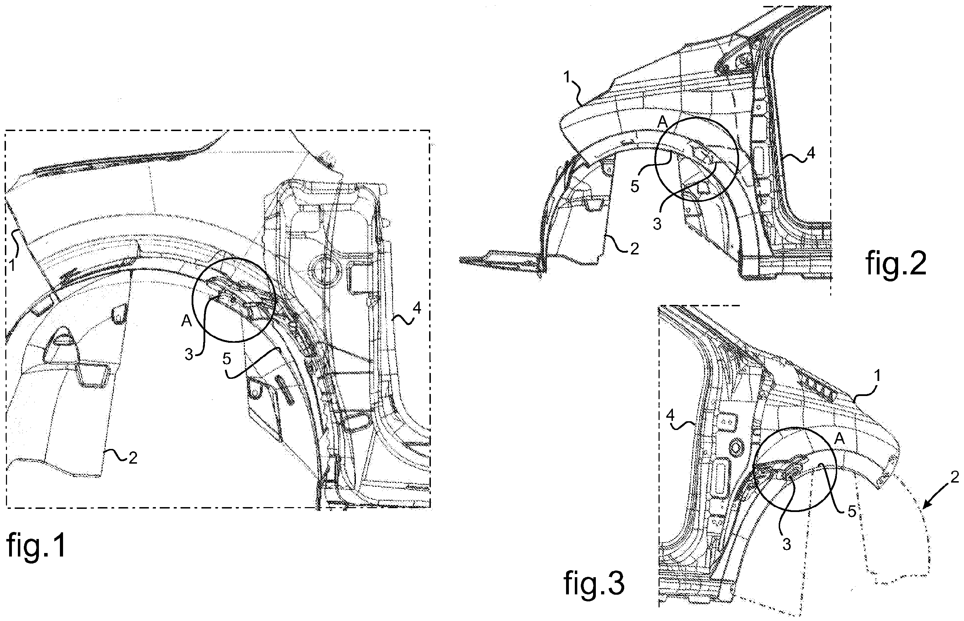

Sur les fig.1 à fig.3, la zone avant d'un véhicule automobile comporte un ensemble de carrosserie latéral avant composé d'éléments de carrosserie comprenant au moins une aile 1, un garde boue 2 et un renfort 3 de rigidification de l'aile 1. L'aile 1, le garde boue 2 et le renfort 3 sont individuellement fixés à une structure porteuse 4 du véhicule.

Pour faciliter la lecture des figures, l'aile 1 est représentée en transparence sur la fig.1 et, sur la fig.3, le garde-boue 2 est schématisé en traits interrompus. En effet depuis l'extérieur vers l'intérieur du véhicule, l'aile 1 est disposée en premier plan, puis un pourtour du garde boue 2 placé en deuxième plan est interposé entre un retour de forme 5 de l'aile 1 et le renfort 3 s'étendant en troisième plan vers la structure porteuse 4.

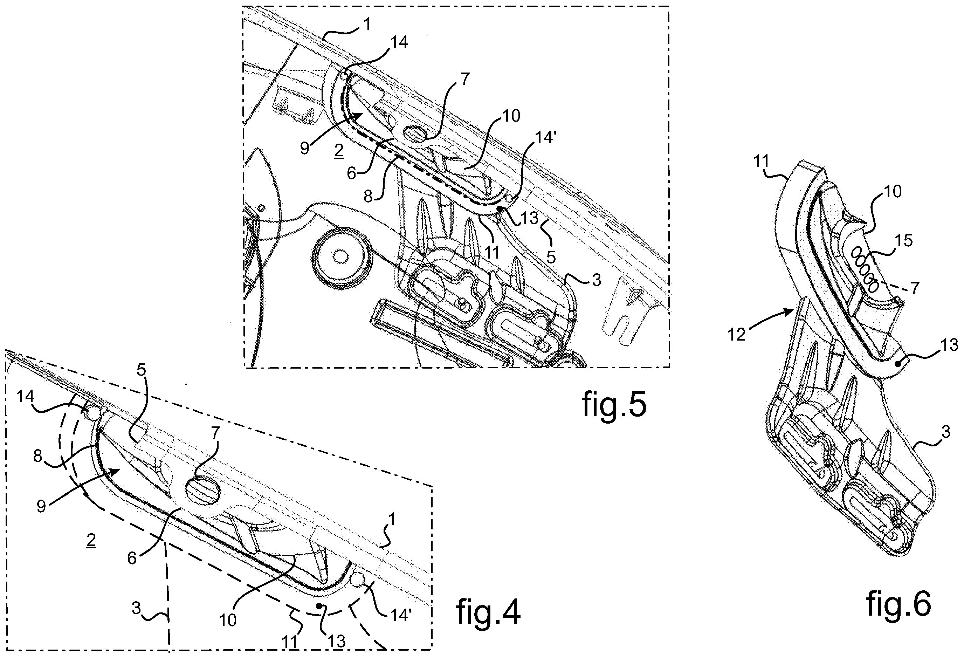

Plus particulièrement sur les fig.4 et fig.5 illustrant le détail A de l'ensemble de carrosserie illustré sur les fig.1 à fig.3, le retour de forme 5 de l'aile 1, orienté vers l'intérieur du véhicule, est rabattu vers une bordure du garde-boue 2 (garde-boue 2 représenté en transparence fig.5), en vue de la fixation de l'aile 1 sur le renfort 3. Le retour de forme 5 intègre une languette 6 par l'intermédiaire de laquelle l'aile 1 est fixée au renfort 3 au moyen d'un organe de fixation aile/renfort 7.

Dans ce contexte, le garde-boue 2 comporte une fenêtre 8 ménageant une ouverture 9 à travers le garde-boue 2, ladite ouverture 9 procurant un accès à la zone de fixation entre l'aile 1 et le renfort 3.

Lors du montage de l'ensemble de carrosserie sur la structure porteuse du véhicule, la fenêtre 8 autorise le passage depuis l'intérieur du véhicule de l'organe de fixation aile/renfort 7 pour fixer l'aile 1 par l'intermédiaire de la languette 6 sur un sabot 10 du renfort 3.

Un problème posé réside dans la présence de l'ouverture 9 ménagée par la fenêtre 8, formant un passage pour d'éventuels éléments extérieurs vers le compartiment moteur du véhicule.

Un autre problème posé réside dans la délicate manipulation du garde-boue 2 lors de son montage à bord du véhicule, suite à l'installation préalable sur la structure porteuse 4 de l'aile 1 et du renfort 3.

Un autre problème posé réside dans la fixation habituellement fastidieuse du garde-boue 2 sur la structure porteuse 4, d'autant plus compte tenu de sa manipulation et de son positionnement délicat à effectuer par un opérateur lors du montage du garde-boue 2 à bord du véhicule.

Pour remédier à ces problèmes, il est proposé d'obturer ladite ouverture 9 ménagée par la fenêtre 8 au moyen du renfort 3, notamment dans sa partie placée en regard de la face de la fenêtre 8 orientée vers l'intérieur du véhicule.

Il est constaté que le renfort 3 obture partiellement l'ouverture 9 ménagée par la fenêtre 8 par l'intermédiaire du sabot 10 dont il est équipé.

Dans ce contexte, le renfort 3 comporte un obturateur 10-11 fermant la fenêtre 8 pour obturer l'ouverture 9 à sa face orientée vers l'intérieur du véhicule. Un tel obturateur 10-11 fait obstacle au passage éventuel d'un corps étranger provenant de l'extérieur du véhicule.

Sur l'exemple de réalisation illustré sur les fig.1 à fig.6 et tel que particulièrement visible sur les fig.4 à fig.6, l'obturateur 10-11 est formé du sabot 10 muni à son pourtour d'un manchon 11.

Pour éviter tout contact entre le garde-boue 2 et le renfort 3 dans sa partie 12 (référencée fig.6) environnant le sabot 10 et de conformation globalement plane notamment, le manchon 11 comporte un débordement 13 par rapport au renfort 3 s'étendant vers le garde-boue 2.

Lors de son montage à bord du véhicule, le garde-boue 2 peut être placé par un opérateur en appui contre le débordement 13 du manchon 11 en excluant tout autre contact du renfort 3 contre le garde boue 2 susceptible d'affecter le positionnement individuel du garde-boue 2 et/ou du renfort 3, voire aussi de l'aile 1, sur la structure porteuse 4.

Grâce à ces dispositions, l'obturateur 10-11 constitue un organe de fermeture de l'ouverture 9 ménagée par la fenêtre 8 interdisant le passage à son travers d'éléments provenant de l'extérieur du véhicule, et cela sans affecter les modalités de fixation de l'aile 1 sur le renfort 3.

En outre, l'obturateur 10-11 constitue un organe de calage du garde-boue 2 lors de son montage à bord du véhicule.

En outre, l'obturateur 10-11 peut être exploité pour conforter la fixation du garde-boue 2 à bord du véhicule.

En effet sur les fig.4 et fig.5, la prise d'appui du garde-boue 2 contre l'obturateur 10-11, et plus spécifiquement contre le manchon 11, permet de fixer le garde-boue 2 sur le renfort 3 au moyen d'organes de fixation garde-boue/renfort 14,14' placés en prise conjointement avec le manchon 11 et avec le garde-boue 2, en étant disposés en bordure de la fenêtre 8.

Sur la fig.6, le sabot 10 comporte un jeu de trous 15 destinés à recevoir sélectivement l'organe de fixation aile/renfort 7. A partir d'une exploitation sélective de l'un des trous 15, un positionnement relatif entre le sabot 10 et l'organe de fixation aile/renfort 7peut être effectué par l'opérateur en fonction des positions relatives entre l'aile 1, le renfort 3 et le garde-boue 2.

## Revendications

1. Ensemble de carrosserie latéral avant pour véhicule automobile, ledit ensemble de carrosserie étant composé d'éléments de carrosserie comprenant au moins une aile (1), un organe de rigidification de l'aile, dit renfort (3), et un garde-boue (2) chacun destinés à être individuellement fixés sur une structure porteuse (4) dudit véhicule automobile, l'aile (1) étant fixée sur le renfort (3) et le garde-boue (2) comportant au moins une fenêtre (8) ménageant à son travers une ouverture (9) d'accès à une zone de fixation entre l'aile (1) et le renfort (3), **caractérisé en ce que** le renfort (3) comporte un obturateur (10-11) constituant un organe d'obturation de ladite ouverture (9) à sa face orientée vers le renfort (3) et constituant un organe de calage du garde-boue (2) contre l'aile (1) par prise d'appui du garde-boue (2) contre le l'obturateur (10-11).

2. Ensemble de carrosserie selon la revendication 1, **caractérisé en ce que** le garde-boue (2) est fixé sur le renfort (3) au moyen d'organes de fixation qualifiés garde-boue/renfort (14,14') et placés en prise conjointement sur l'obturateur (10-11) et sur le garde-boue (2) en bordure de la fenêtre (8).

3. Ensemble de carrosserie selon l'une quelconque des revendications 1 et 2, **caractérisé en ce que** l'aile (1) étant fixée au renfort (3) par l'intermédiaire d'un sabot (10) intégré au renfort (3), l'obturateur (10-11) est agencé en manchon (11) entourant au moins en partie ledit sabot (10).

4. Ensemble de carrosserie selon la revendication 3, **caractérisé en ce que** le manchon (11) comporte un débordement (13) par rapport au renfort (3) dans sa partie (12) considérée dans l'environnement proche du sabot (10), ledit débordement (13) étant au moins orienté vers le garde-boue (2) et constituant un organe d'appui du garde-boue (2) contre le renfort (3).

5. Ensemble de carrosserie selon l'une quelconque des revendications 3 et 4, **caractérisé en ce que** l'aile (1) étant fixée au renfort (3) par l'intermédiaire d'au moins une languette (6) intégrée à un retour de forme (5) de l'aile (1) coiffant une bordure du garde-boue (2) interposée entre le renfort (3) et la languette (6), au moins un organe de fixation qualifié aile/renfort (7) s'étend à travers la fenêtre (8) du garde-boue (2) en étant placé en prise conjointement avec la languette (6) et le sabot (10).

6. Ensemble de carrosserie selon l'une quelconque des revendications 3 à 5, **caractérisé en ce que** le sabot (10) comporte un jeu de trous (15) recevant l'organe de fixation aile/renfort (7) en autorisant, à partir d'une exploitation sélective de l'un des trous (15) dudit jeu de trous (15), un positionnement relatif entre le sabot (10) et l'organe de fixation aile/renfort (7) en fonction des positions relatives entre l'aile (1), le renfort (3) et le garde-boue (2).

7. Ensemble de carrosserie selon l'une quelconque des revendications 1 à 6, **caractérisé en ce que** l'obturateur (10-11) est intégré de fabrication au renfort (3).

8. Véhicule automobile équipé d'un ensemble de carrosserie selon l'une quelconque des revendications 1 à 7, le véhicule automobile comportant une structure porteuse (4) sur laquelle sont individuellement fixés les éléments de carrosserie de l'ensemble de carrosserie, le renfort (3) étant fixé en interposition entre l'aile (1) et la structure porteuse (4) contre lesquels le renfort (3) prend directement des appuis antagonistes.

9. Procédé d'assemblage à bord d'un véhicule automobile conforme à la revendication 8, d'un ensemble de carrosserie selon l'une quelconque des revendications 1 à 7, **caractérisé en ce que** le procédé comprend les opérations suivantes :
-) fixer le renfort (3) et l'aile (1) sur la structure porteuse (4),
-) approcher le garde boue (2) en position de montage sur la structure porteuse (4) et caler le garde-boue (2) en appui contre l'obturateur (10-11) en direction de l'aile (1), puis fixer le garde boue (2) sur la structure porteuse (4),
-) fixer l'aile (1) sur le renfort (3) depuis l'intérieur du véhicule à travers l'ouverture (9) ménagée par la fenêtre (8) du garde-boue (2) et fermée à sa face orientée vers le renfort (3) par l'obturateur (10-11).

10. Procédé selon la revendication 9, **caractérisé en ce que** le procédé comprend en outre une opération de fixation du garde-boue (2) sur le renfort (3), effectuée postérieurement à l'opération de fixation de l'aile (1) sur le renfort (3).

## Patentansprüche

1. Vorderseitiger Karosserieaufbau für ein Kraftfahrzeug, wobei der Karosserieaufbau aus Karosserielementen besteht, die mindestens einen Flügel (1), ein Versteifungsorgan des Flügels, eine sogenannte Verstrebung (3), und einen Kotflügel (2) umfassen, die jeweils angeordnet sind, um einzeln an einer Tragstruktur (4) des Kraftfahrzeugs befestigt zu werden, wobei der Flügel (1) an der Verstrebung (3) und dem Kotflügel (2) befestigt ist, der mindestens ein Fenster (8) aufweist, das an seiner Quere eine Zugriffsöffnung (9) zu einem Befestigungsbereich zwischen dem Flügel (1) und der Verstrebung (3) bereitstellt, **dadurch gekennzeichnet, dass** die Verstrebung (3) einen Abdichter (10-11) aufweist, der ein Abdichtungsorgan der Öffnung (9) an seiner Fläche, die der Verstrebung (3) zugewandt ist, bildet und ein Verkeilungsorgan des Kotflügels (2) gegen den Flügel (1) durch Stützen des Kotflügels (2) gegen den Abdichter (10-11) bildet.

2. Karosserieaufbau nach Anspruch 1, **dadurch gekennzeichnet, dass** der Kotflügel (2) an der Verstrebung (3) mittels Befestigungsorganen befestigt ist, die als Kotflügel/Verstrebung (14, 14') bezeichnet werden und gemeinsam in Eingriff mit dem Abdichter (10-11) und mit dem Kotflügel (2) am Rand des Fensters (8) platziert sind.

3. Karosserieaufbau nach einem der Ansprüche 1 und 2, **dadurch gekennzeichnet, dass** der Flügel (1), der durch einen Schuh (10), der in die Verstrebung (3) eingefügt ist, an der Verstrebung (3) befestigt ist, der Abdichter (10-11) mit einer Muffe (11) eingerichtet ist, die mindestens einen Teil des Schuhs (10) umgibt.

4. Karosserieaufbau nach Anspruch 3, **dadurch gekennzeichnet, dass** die Muffe (11) einen Überstand (13) in Bezug auf die Verstrebung (3) in ihrem Teil (12), der als in der nahen Umgebung des Schuhs (10) betrachtet wird, aufweist, wobei der Überstand (13) mindestens dem Kotflügel (2) zugewandt ist und ein Stützorgan des Kotflügels (2) gegen die Verstrebung (3) bildet.

5. Karosserieaufbau nach einem der Ansprüche 3 und 4, **dadurch gekennzeichnet, dass** der Flügel (1), der an der Verstrebung (3) durch mindestens eine Zunge (6), die in eine Formrückkehr (5) des Flügels (1) eingefügt ist, die einen Rand des Kotflügels (2), der zwischen der Verstrebung (3) und der Zunge (6) eingesetzt ist, überragt, sich mindestens ein Befestigungsorgan, das als Flügel/Verstrebung (7) bezeichnet wird, durch das Fenster (8) des Kotflügels (2) erstreckt und gemeinsam in Eingriff mit der Zunge (6) und dem Schuh (10) platziert ist.

6. Karosserieaufbau nach einem der Ansprüche 3 bis 5, **dadurch gekennzeichnet, dass** der Schuh (10) einen Satz von Löchern (15) aufweist, der das Befestigungsorgan Flügel/Verstrebung (7) aufnimmt, indem er ab einer selektiven Nutzung eines der Löcher (15) des Satzes von Löchern (15), eine relative Positionierung zwischen dem Schuh (10) und dem Befestigungsorgan Flügel/Verstrebung (7) in Abhängigkeit der relativen Positionen zwischen dem Flügel (1), der Verstrebung (3) und dem Kotflügel (2) ermöglicht.

7. Karosserieaufbau nach einem der Ansprüche 1 bis 6, **dadurch gekennzeichnet, dass** der Abdichter (10-11) in der Herstellung in die Verstrebung (3) eingefügt ist.

8. Kraftfahrzeug, das mit einem Karosserieaufbau nach einem der Ansprüche 1 bis 7 versehen ist, wobei das Kraftfahrzeug eine Tragstruktur (4) aufweist, an der die Karosserieelemente des Karosserieaufbaus einzeln befestigt sind, wobei die Verstrebung (3) in Einfügung zwischen dem Flügel (1) und der Tragstruktur (4) befestigt ist, gegen die die Verstrebung (3) sich sofort gegenstützt.

9. Montageverfahren an Bord eines Kraftfahrzeugs nach Anspruch 8, eines Karosserieaufbaus nach einem der Ansprüche 1 bis 7, **dadurch gekennzeichnet, dass** das Verfahren die folgenden Vorgänge umfasst:
-) Befestigen der Verstrebung (3) und des Flügels (1) an der Tragstruktur (4),
-) Herannahen des Kotflügels (2) in Montageposition an die Tragstruktur (4) und Verkeilen des Kotflügels (2), der sich gegen den Abdichter (10-11) stützt, in Richtung des Flügels (1), dann Befestigen des Kotflügels (2) an der Tragstruktur (4),
-) Befestigen des Flügels (1) an der Verstrebung (3) ab dem Inneren des Fahrzeugs durch die Öffnung (9), die durch das Fenster (8) des Kotflügels (2) bereitgestellt wird und an seiner Fläche, die der Verstrebung (3) zugewandt ist, durch den Abdichter (10-11) geschlossen ist.

10. Verfahren nach Anspruch 9, **dadurch gekennzeichnet, dass** das Verfahren weiter einen Befestigungsvorgang des Kotflügels (2) an der Verstrebung (3) umfasst, der nach dem Befestigungsvorgang des Flügels (1) an der Verstrebung (3) ausgeführt wird.

## Claims

1. Front side bodywork assembly for a motor vehicle, said bodywork assembly being comprised of bodywork elements comprising at least one wing (1), a member for stiffening the wing, referred to as a reinforcement (3), and a mudguard (2) each one intended to be individually attached to a bearing structure (4) of said motor vehicle, the wing (1) being attached to the reinforcement (3) and the mudguard (2) comprising at least one window (8) providing an opening (9) through same for access to an attachment area between the wing (1) and the reinforcement (3), **characterised in that** the reinforcement (3) comprises a seal (10-11) constituting a member for sealing said opening (9) at its face oriented towards the reinforcement (3) and constituting a member for setting the mudguard (2) against the wing (1) by resting the mudguard (2) against the seal (10-11).

2. Bodywork assembly according to claim 1, **characterised in that** the mudguard (2) is attached to the reinforcement (3) by means of qualified mudguard/reinforcement attachment members (14, 14') and placed resting jointly on the seal (10-11) and on the mudguard (2) at the edge of the window (8).

3. Bodywork assembly according to any of claims 1 and 2, **characterised in that** the wing (1) being attached to the reinforcement (3) by the intermediary of a shoe (10) integrated into the reinforcement (3), the seal (10-11) is arranged as a seal (11) surrounding at least partially said shoe (10).

4. Bodywork assembly according to claim 3, **characterised in that** the sleeve (11) comprises an overflow (13) in relation to the reinforcement (3) in its portion (12) considered in the environment close to the shoe (10), said overflow (13) being at least oriented towards the mudguard (2) and constituting a member for pressing the mudguard (2) against the reinforcement (3).

5. Bodywork assembly according to any of claims 3 and 4, **characterised in that** the wing (1) being attached to the reinforcement (3) by the intermediary of at least one tab (6) integrated into a form return (5) of the wing (1) covering an edge of the mudguard (2) inserted between the reinforcement (3) and the tab (6), at least one qualified wing/reinforcement attaching member (7) extends through the window (8) of the mudguard (2) by being placed resting jointly with the tab (6) and the shoe (10).

6. Bodywork assembly according to any of claims 3 to 5, **characterised in that** the shoe (10) comprises a set of holes (15) receiving the wing/reinforcement attaching member (7) by authorising, from a selective use of one of the holes (15) of said set of holes (15), a relative positioning between the shoe (10) and the wing/reinforcement attaching member (7) according to the relative positions between the wing (1), the reinforcement (3) and the mudguard (2).

7. Bodywork assembly according to any of claims 1 to 6, **characterised in that** the seal (10-11) is integrated by manufacturing into the reinforcement (3).

8. Motor vehicle provided with a bodywork assembly according to any of claims 1 to 7, the motor vehicle comprising a bearing structure (4) whereon are individually attached the bodywork elements of the bodywork assembly, the reinforcement (3) being attached via insertion between the wing (1) and the bearing structure (4) against which the reinforcement (3) directly takes antagonist bearings.

9. Method for assembling on board a motor vehicle in accordance with claim 8, of a bodywork assembly according to any of claims 1 to 7, **characterised in that** the method comprises the following operations:
-) attaching the reinforcement (3) and the wing (1) onto the bearing structure (4),
-) approaching the mudguard (2) in the mounting position on the bearing structure (4) and setting the mudguard (2) resting against the seal (10-11) in the direction of the wing (1), then attaching the mudguard (2) onto the bearing structure (4),
-) attaching the wing (1) onto the reinforcement (3) from the inside of the vehicle through the opening (9) arranged by the window (8) of the mudguard (2) and closed at the face thereof oriented towards the reinforcement (3) by the seal (10-11).

10. Method according to claim 9, **characterised in that** the method further comprises an operation of attaching the mudguard (2) onto the reinforcement (3), carried out after the operation of attaching the wing (1) onto the reinforcement (3).
